# FASCICULE DE BREVET EUROPEEN

(11) **EP 0 681 408 B1**
(45) Date de publication et mention de la délivrance du brevet: **13.11.1996**
(21) Numéro de dépôt: 95401013.8
(22) Date de dépôt: 02.05.1995
(51) Int. Cl.: H04Q 7/32

(54) **Procédé et dispositif d'établissement d'une connexion téléphonique de ou vers un abonné mobile possédant plusieurs modes d'abonnements**
Verfahren und Vorrichtung zur Herstellung von Fernsprechverbindungen von oder zu einem mobilen Teilnehmer mit mehreren Abonnementenmoden
Method and device for completing calls to and from a mobile subscriber having several subscription modes

(30) Priorité: 02.05.1994 FR 9405317
(43) Date de publication de la demande: 08.11.1995
(73) Titulaire: GEMPLUS, 13420 Gemenos (FR)
(72) Inventeur: Martineau, Philippe, F-75116 Paris (FR)
(74) Mandataire: Schmit, Christian Norbert Marie

(56) Documents cités:
- WO-A-92/19078
- WO-A-94/08433
- PATENT ABSTRACTS OF JAPAN vol. 18 no. 69 (E-1502) & JP-A-05 284103 (TOSHIBA)

## Description

La présente invention a pour objet un procédé ainsi qu'un dispositif d'établissement d'une connexion téléphonique entre deux interlocuteurs, notamment lorsque l'un des deux interlocuteurs dispose d'un poste téléphonique mobile.

La gestion de telles communications téléphoniques est actuellement organisée de la façon suivante. Un gestionnaire de réseau distribue des équipements mobiles à ses abonnés. Pour leur permettre de faire fonctionner ces équipements en tant que poste téléphonique mobile, il leur délivre de plus des supports à puces électroniques, généralement des cartes à puces électroniques, qui une fois insérées dans ces équipements en permettent l'utilisation. Le principe de fonctionnement est le suivant. Un abonné disposant d'un tel poste téléphonique mobile insère sa carte à puce dans son équipement et ouvre une session de communication, de veille ou d'appel, en frappant sur certains des boutons du clavier du poste. Le poste émet alors un signal de reconnaissance à destination d'une borne fixe située à proximité (par exemple fixée sur un poteau d'éclairage public ou en façade d'un immeuble proche). La borne entre ainsi en relation d'une part avec le poste téléphonique mobile et d'autre part avec un central téléphonique appartenant à ce gestionnaire de réseau pour lui signaler que l'abonné en question est maintenant connecté au réseau.

En pratique le message envoyé par la borne au central téléphonique comporte des indications relatives à l'identité de l'abonné ainsi qu'à un protocole de jonction à utiliser pour le mettre en communication. Ce protocole de jonction comporte des informations de localisation permettant la commutation de liaisons pour joindre la borne, ainsi que des indications de mode de connexion (option de multiplexage, bande passante autorisée, ...) à utiliser lors d'une communication. Ce protocole de jonction est mémorisé pour cet abonné pendant une durée de session.

Un abonné possesseur d'un équipement peut vouloir utiliser cet équipement pour ses besoins personnels ou pour ses besoins professionnels. Dans l'état actuel de la technique, il est prévu de remettre à cet abonné deux contrats d'abonnement: un contrat professionnel et un contrat privé concrétisés chacun par une carte à puce dédié à l'usage concerné. Pour simplifier, pendant les heures de bureau, l'abonné ouvre des sessions de communication avec sa carte à puce professionnelle. Le soir, ou pendant la fin de semaine, il ouvre des sessions de communication avec sa carte à puce privée. Quand il émet des appels à partir de son poste mobile, les durées et les distances de transmission relatives à ces appels sont mémorisées par le central et affectées à l'abonnement qui correspond à l'identité de l'abonné évoquée au début de la session de communication. Ainsi les différentes factures sont acheminées régulièrement à leurs destinataires respectifs.

En pratique pour recevoir des appels, le poste mobile correspond à un numéro de téléphone d'appel, professionnel pour les communications professionnelles et privé pour les communications privées. Ces numéros de téléphone sont connus des interlocuteurs qui veulent joindre cet abonné. Ces numéros sont mémorisés dans une mémoire du central, dans des enregistrements qui possèdent, en regard, l'identité. Il existe donc, mémorisé dans ce central des chaînes d'informations: numéro de téléphone - identité d'abonné - protocole de jonction. On se trouve donc dans une situation similaire à celle que l'on connaît avec les postes téléphoniques fixes, chaque interlocuteur possédant un numéro de téléphone privé où on peut le joindre chez lui et un numéro téléphone professionnel où on peut le joindre au bureau.

La notion de mobilité, et de transport avec soi d'un poste téléphonique, rend obsolète ce mode de communication. En effet l'utilisation systématique d'un poste téléphonique mobile impose les changements de cartes évoqués ci-dessus d'une manière systématique, même si le détenteur de l'appareil n'a pas l'intention de téléphoner. En effet, s'il n'a pas l'intention de téléphoner, il doit quand même insérer la carte à puce relative à son mode d'abonnement pour recevoir des appels concernant cet abonnement. S'il ne le fait pas il reste en abonnement d'un type, par exemple professionnel, alors qu'il est chez lui. Dans ces conditions, il ne peut recevoir de coups de téléphone qui seraient adressés à son numéro personnel.

Une solution à ce problème a déjà été envisagé dans les documents WO-A-9 408 433 et WO-A-9 219 078.

L'invention a pour objet de remédier à cet inconvénient en procédant d'une manière complètement différente. On y distingue appels entrants où l'abonné est appelé et appels sortants où l'abonné appelle. L'interlocuteur abonné peut ouvrir une session selon un mode, et les appels sortants sont comptabilisés pour lui être facturés selon ce mode. Par contre les appels entrants lui sont adressés quel que soit le mode de connexion , privé ou professionnel, dans lequel il est relié. En pratique cette solution conduit à ne retenir dans les registres du central de télécommunication qu'un seul numéro de téléphone d'abonné pour cet abonné, que cet abonné soit connecté selon un mode professionnel ou un mode privé. En variante il a toujours deux numéros de téléphone, mais l'un et l'autre sont essayés par le central.

Pour pouvoir néanmoins, gérer les problèmes de facturation lors des appels sortants, ou éventuellement dans certains cas les problèmes de facturation liés au appels entrants, l'invention prévoit une modification de la structure de la mémoire du central téléphonique de façon à garder les informations utiles.

L'invention concerne donc un procédé d'établissement d'une connexion téléphonique entre un premier et un deuxième interlocuteur, ce premier interlocuteur disposant d'un poste téléphonique du type mobile et étant en relation avec le deuxième interlocuteur par l'intermédiaire d'un système téléphonique qui comporte un central et un réseau de liaisons avec des postes téléphoniques mobiles, ce procédé comportant les étapes suivantes:
- on mémorise dans une mémoire de correspondance du central un enregistrement montrant une correspondance entre une identité relative à ce premier interlocuteur et un numéro de téléphone par lequel ce premier interlocuteur peut être appelé par le deuxième,
- on mémorise dans une mémoire de travail du central, pendant une session de veille ou d'appel du poste téléphonique mobile de ce premier interlocuteur, une correspondance entre cette identité de ce premier interlocuteur et un protocole de jonction par lequel il peut être joint,
- on mémorise, dans la mémoire de correspondance du central, un deuxième enregistrement de correspondance entre l'identité de ce premier interlocuteur et ce même numéro de téléphone,
- on assortit chacun des deux enregistrements de correspondance ainsi mémorisés d'une information relative à un mode de gestion de la connexion à établir, et
- on assortit un des deux enregistrements de correspondance d'une information d'activation.

L'invention concerne aussi un dispositif correspondant.

En agissant ainsi on a séparé la contrainte technique de liaison (mémorisation du protocole de jonction pour joindre l'abonné) de la contrainte technique de gestion (mémorisation de l'identité active de l'abonné pour effectuer la gestion de son compte). Le résultat est qu'on peut le joindre avec un seul numéro de téléphone.

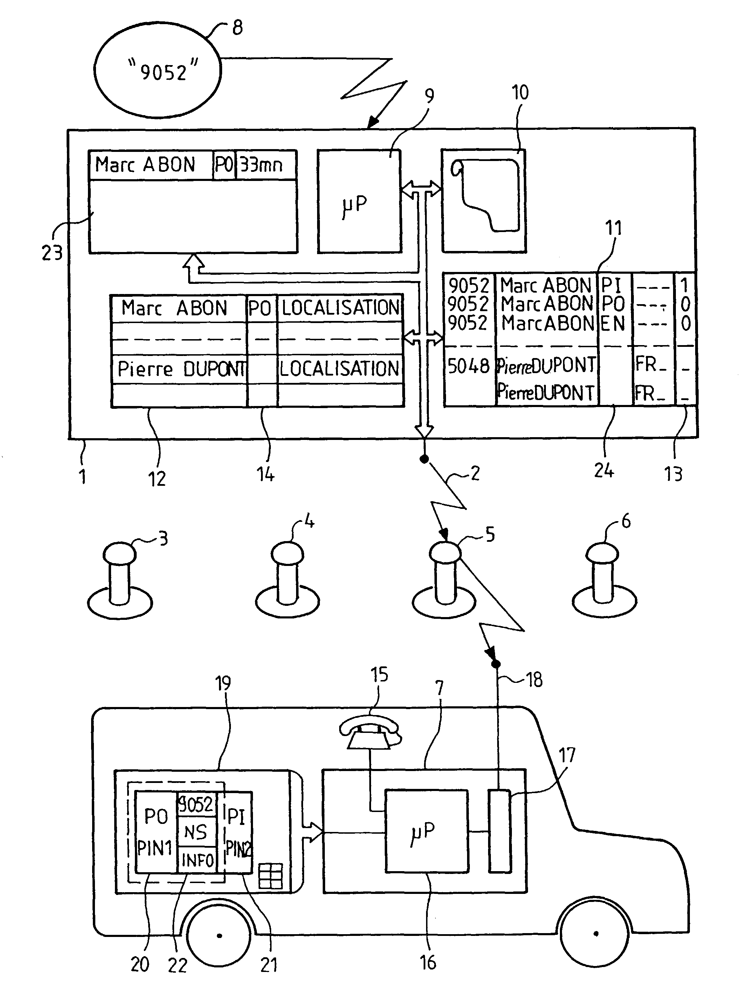

L'invention sera mieux comprise à la lecture de la description qui suit et à l'examen de la figure 1 qui l'accompagne. Celle-ci n'est donnée qu'à titre indicatif et nullement limitatif de l'invention.

Elle montre un dispositif utilisable pour mettre en oeuvre le procédé de l'invention. On y distingue un central téléphonique 1 et un réseau de liaisons téléphoniques telles que 2, entre ce central et des bornes fixes, 3 à 6, placées en différents endroits d'un parcours emprunté par un abonné porteur d'un téléphone mobile 7. D'une manière classique, un interlocuteur 8 qui cherche à entrer en relation avec l'abonné du téléphone mobile 7 émet en direction du central 1 un appel comportant essentiellement la composition d'un numéro de téléphone. Dans le central 1, il y a un circuit de commutation comprenant essentiellement un microprocesseur de traitement 9 relié à une mémoire programme de commutation 10. Le microprocesseur décode le numéro de téléphone composé en allant chercher dans une mémoire de correspondance 11 l'identité, le nom, d'un abonné qui correspond à ce numéro de téléphone.

Par exemple, si le numéro de téléphone composé est le numéro 5048, le microprocesseur 9 sait qu'il s'agit d'un abonné nommé Pierre DUPONT. A cet abonné Pierre DUPONT peut correspondre dans une mémoire de travail 12 un enregistrement montrant que l'abonné Pierre DUPONT est en état de veille et est localisé à un endroit particulier, déterminé par un protocole particulier de connexion. La mémoire de travail 12 permet donc au processeur 9 d'alerter une des bornes 3 à 6 qui est en relation de veille avec l'abonné en question. Une fois que cette connexion est établie, la communication se déroule normalement. A l'issue, la facture de communication est adressée, selon les pays uniquement à l'appelant (dans ce cas le service de connexion avec un poste mobile n'est pas particulièrement facturé), ou bien elle est partagée d'une part entre l'appelant et d'autre part l'appelé (ce dernier supportant un coût supplémentaire de service lié à sa mobilité).

Un problème peut survenir cependant si l'abonné Pierre DUPONT qui a souscrit un abonnement à titre professionnel et a reçu pour celui-ci un numéro d'appel 5048, a également souscrit un abonnement privé, et a reçu pour celui-ci un numéro d'appel 5049. Selon le numéro qu'il aura mis en service, il pourra ou il ne pourra pas recevoir l'appel qui lui est en fait destiné.

Dans l'invention, par opposition, on a dupliqué dans la mémoire de correspondance 11 les enregistrements relatifs à un même titulaire en leur attribuant à chaque fois un même numéro de téléphone. Par exemple l'abonné Marc ABON possède pour son abonnement privé (dont l'enregistrement est complété par une indication PI) un numéro de téléphone 9052. Le même abonné possède pour son abonnement professionnel (indiqué PO) également le numéro de téléphone 9052.

On a indiqué dans les deux enregistrements de la mémoire 11 une même identité et un même numéro de téléphone. Par identité il faut cependant comprendre d'une part la personne qui doit être jointe au téléphone: c'est toujours Marc ABON, et d'autre part les références de la personne qui supporte les frais du compte. En pratique PI est synonyme d'adresse privée et PO d'adresse professionnelle. Les couples Marc ABON-PI et Marc ABON-PO sont donc représentatifs de ces deux personnes et permettent la différenciation.

Par ailleurs, dans une variante, conformément à ce qui existait préalablement dans l'état de la technique, la mémoire 11 comporte en face de chaque enregistrement dans une zone 13 un index, binaire ou plus complexe, montrant dans un cas si un abonné est en veille ou dans un autre cas s'il ne l'est pas. Il est donc possible pour un abonné donné, disposant de deux modes d'abonnement de mettre en activité un de ses modes ou l'autre. En pratique ceci signifiera que lorsqu'il appellera lui-même c'est ce mode d'abonnement en activité qui devra impliquer la facturation. Par contre, quand il sera appelé, on saura tout simplement sur quel mode de connexion il est connecté. Au besoin la partie de facturation concernée par les appels entrants sera affectée à ce mode.

Par rapport à l'état de la technique, on constate une différence dans les enregistrements: le nom de l'abonné ou son identification peuvent être communs à plusieurs enregistrements, de même que le numéro de téléphone. Par contre une indication privée (PI), professionnelle (PO) ou autre indique la différence. A l'opposé dans l'état de la technique un même abonné devait en définitive souscrire deux abonnements qui étaient différencié par la nature de l'adresse accolée à l'identification de leur nom et par le numéro de téléphone. Le fait de prévoir une même identification et un même numéro de téléphone retentit dans la création d'une information supplémentaire à mémoriser: PO ou PI dans une zone 24 de la mémoire 11. Dans la mémoire 11, d'une manière classique, on note des indications relatives à la nationalité (FRAC) du demandeur ainsi que d'autre informations qui sont utiles pour la gestion du réseau de communication avec des téléphones mobiles. Ces indications sont connues dans l'état de la technique et n'ont pas à être particulièrement décrites ici. Elles sont utilisées de la même façon.

L'index présent en zone 13 de la mémoire 11 pour signaler qu'un abonné est en session de veille selon un mode de connexion donnée peut être tout aussi bien enregistré dans la mémoire 12. En effet, il est par exemple possible de noter pour l'abonné Marc ABON que son mode de connexion, et donc le mode de gestion associé à la facturation, sera le mode professionnel ou privé selon la session de connexion qu'il aura ouverte. En pratique, lorsqu'un appel entrant arrive dans le central 1, le processeur 9 peut consulter d'abord la mémoire 11 pour trouver en face du numéro d'appel une ou des identités d'abonné et de choisir parmi ces identités d'abonné celle, unique (avec un 1) qui est en état de veille. Si aucune n'est en état de veille (s'il y a un zéro pour toutes), le central 1 peut émettre un message à destination de l'appelant l'informant de ce que l'abonné avec le téléphone mobile n'est pas joignable.

Cependant il est possible d'agir différemment. Après consultation de la mémoire 11, le processeur 9 peut savoir qu'il s'agit, pour le numéro composé 9052, dans tous les cas de l'abonné Marc ABON. Il peut alors, en absence de zone 13 dans la mémoire 11, aller consulter la mémoire 12 pour savoir si un abonné Marc ABON est en état de veille, et le cas échéant, sous quel mode. La mémoire 12 comporte dans ce cas une zone 14 dans laquelle le mode de connexion actif est également indiqué.

Selon le choix retenu pour la gestion de cette information on agira en conséquence au moyen du programme contenu dans la mémoire 10. Il y a cependant redondance entre l'information présente dans la zone 14 de la mémoire 12 et celle présente dans la zone 13 de la mémoire 11 en regard d'un enregistrement donné. On peut vouloir cette redondance, ou vouloir faire fonctionner le système d'une façon ou d'une autre.

Dans tous les cas, au moment où l'abonné Marc ABON est détecté dans la mémoire 12, on repère en correspondance de l'enregistrement qui le concerne une localisation concernant le protocole de jonction et indiquant qu'il peut être joint en passant par la borne 5, ainsi que par un mode de connexion (multiplexage, bande de fréquence ...) défini pour cette connexion en attente.

Alors que la mémoire 11 est une mémoire non volatile du central 1, la mémoire 12 est par essence une mémoire volatile. Lorsque un abonné sort du mode de veille, par exemple par coupure de son poste, son mode de veille est perdu et il n'est donc plus considéré comme connecté. En pratique l'enregistrement correspondant dans la mémoire 12 disparaît. Il est affacé. Dans ce cas l'index en zone 13 devra disparaître aussi. Selon le choix retenu pour la gestion de cette information on agira en conséquence au moyen du programme contenu dans la mémoire 10. On connaît par ailleurs des systèmes où, pour des raisons de simplification de gestion, une ouverture de session en veille est limitée en durée, en général à 4 heures. Au delà de 4 heures l'enregistrement est annulé de la mémoire 12.

Dans un perfectionnement, plutôt que de prévoir deux enregistrements pour deux abonnements différents de l'abonné on pourra en prévoir au moins trois. Deux au moins seront destinés aux appels sortants et un sera destiné aux appels entrants. Cette particularité est tout à fait intéressante dans les cas où, comme dans certains pays, on ne facture pas les appels entrants. L'information relative au type d'abonnement (PO ou PI) qui accompagne le mode de veille n'est alors pas particulièrement utile.

De même , avec l'invention, il est également possible de prévoir d'autres modes de facturation pour un même abonnement, pour un même individu avec un même numéro d'appel. Il est par exemple possible de prévoir un deuxième abonnement privé dans lequel les communications internationales sont interdites de manière à ce que, par exemple, les enfants de l'abonné ne puissent se livrer avec le poste mobile à des communications couteuses sans sa surveillance. Dans tous les cas son numéro de téléphone en situation de veille restera disponible pour des appels entrants en provenance de n'importe où, par contre le mode d'utilisation en appel sera paramètré en fonction du choix d'abonnement retenu et pour contenir des restrictions d'utilisations. Ces types de restrictions sont déjà en usage, dans l'état de la technique, mais abonnement par abonnement, avec des numéros d'appel différents. Il est ainsi possible de prévoir que le mode d'utilisation professionnel est limité à une plage horaire concernant les heures d'ouverture des bureaux en semaine. En dehors de ces heures,le mode professionnel est invalide. Cette invalidation peut être gérée par le central 1 ou par le microprocesseur contenu dans le poste téléphonique 7.

En pratique le poste téléphonique mobile 7 de l'abonné comporte un combiné 15 muni de boutons de commande. Le combiné est en relation avec un circuit de traitement, notamment un microprocesseur 16, lui-même en relation avec des circuits de réception 17 en liaison radio-électrique avec la borne 5 par l'intermédiaire d'une antenne 18. Pour la mise en oeuvre d'une communication l'abonné introduit normalement une carte à puce 19 dans l'équipement téléphonique 7 de manière à en permettre le fonctionnement. Il est à ce moment sollicité pour entrer un code d'identification personnel (PIN) jouant en outre un rôle de code secret de manière à ce que quelqu'un en possession de sa carte ne puisse téléphoner à son insu et à ses frais. Une fois que ce numéro d'identification est entré, le microprocesseur 16 lance à destination d'une borne 5 ou 6 qui serait à sa proximité un appel en vue de prévenir le central téléphonique 1 qu'il est au moins en veille, sinon en train de vouloir lancer un appel. Ce mode de connexion implique que pour pouvoir mettre en oeuvre l'invention l'abonné dispose de deux carte à puce, l'une pour utilisation privée, l'autre pour utilisation professionnelle et qu'il entre le code d'identification correspondant.

Selon un perfectionnement de l'invention, l'abonné ne possèdera qu'une seule carte à puce qui sera par contre partagée dans sa mémoire entre les deux, ou plusieurs, applications possibles. Notamment, au moment où l'abonné sera sollicité pour entrer son code d'identification personnel (PIN), il choisira parmi les codes d'identification qui sont les siens celui qui correspond au mode d'utilisation qu'il veut retenir: mode privé, mode professionnel, ou autre. Ce faisant il y a dans la carte une bifurcation fonctionnelle qui permet de transmettre au central 1 des informations relatives au mode de gestion choisi. Ceci n'est pas particulièrement difficile à mettre en oeuvre.

En effet on complète le système d'exploitation d'une carte à puce de type classique pour qu'au moment de la reconnaissance du code d'identification on fasse un premier test pour savoir si un premier code d'identification entré correspond à un premier mode donné d'utilisation. S'il y correspond, un programme d'utilisation du poste 7 est mis en oeuvre, et le poste 7 est mis en relation avec la borne 5 en transmettant les indications d'identification relatives au code reconnu. Si ce n'est pas le cas, le premier test est suivi d'un second test pour comparer le code entré avec celui correspondant à un second mode d'utilisation de la carte, et ainsi de suite jusqu'à ce qu'on trouve le bon. Si on n'en trouve aucun, on rejette la présentation du code d'identification comme incorrecte. Il est donc facile de mettre en oeuvre dans un carte à puce ce type d'utilisation.

Cependant, il se pose certains problèmes dûs à la capacité. En effet les mémoires des carte à puce sont limitées en taille. Dans certains cas la taille n'est que de 3 kilooctets dans certains autres elle est de 8 kilooctets. Même si on prend des carte à puce de 8 kilooctets, le fait de pouvoir ouvrir deux modes de communication limite à 4 kilooctets par session le nombre d'informations stockages au cours de la communication établie. En effet dans la téléphonie mobile qui utilise un réseau numérique, des informations numériques peuvent être envoyées et être stockées dans la mémoire de la carte à puce. Cette fonction est dite fonction PAGER dans la littérature anglo-saxonne, et est en quelque sorte une boite aux lettres téléphonique portable que l'utilisateur peut consulter à volonté. Conformément à ce qui a été dit ci-dessus, le contenu de cette boite aux lettre serait limité à 4 Koctets.

Dans l'invention, on admet cependant que, s'agissant du même utilisateur, on va partager la mémoire qui sert à enregistrer ces données entre les différentes sessions de connexion. Ainsi la carte à puce 19 comporte, dans des zones mémoires 20 et 21 spécifiquement destinées à certaines sessions de connexion, des informations relatives aux codes d'identification, PIN1 ou PIN2 respectivement, ainsi que des informations à transmettre au central, PO ou PI respectivement, pour indiquer que le mode de connexion choisi est un mode professionnel ou privé. Dans les zones 20 et 21 peuvent par ailleurs être placés des éléments de programme gérant le mode de connexion, éventuellement des restrictions d'heures. Les zones 20 et 21 sont normalement non accessibles à l'utilisateur et protégées par code secret.

Dans une zone 22 partageable par les deux modes de connexion, et donc montré ici schématiquement d'une manière intermédiaire entre les zones 20 et 21, on peut stocker toutes les informations non secrètes telles que par exemple le numéro d'accès, 9052, pour que l'abonné puisse s'en souvenir le moment venu, le numéro de série de la carte à puce, NS, ainsi que des informations INFO relatives à des messages qui sont passés. On peut aussi enregistrer un annuaire des différents interlocuteurs que l'abonné a l'habitude de contacter directement au téléphone et dont les numéros peuvent être composés automatiquement par le combiné 7 par une sélection adéquate. Ce type de fonction existe déjà, mais carte par carte.

La désignation de la zone 22 de la mémoire connue partageable par les sessions d'utilisation peut être réalisée simplement en remarquant que, dans tout système de gestion d'une carte à puce, il existe une mémoire réservée dans laquelle en général même le titulaire ne peut rien écrire ni même quelques fois lire, et une zone mémoire libre. Cette zone mémoire libre est située à des adresses déterminées. Dans l'invention on communique, à titre de mémoire libre, ces adresses déterminées aux deux programmes ouvrant les sessions.

Le central 1 comporte encore une mémoire 23 de gestion des communications. Chaque fois qu'une communication est établie, parce qu'un abonné est en veille et que quelqu'un l'a appelé ou parce que lui même a appelé, on note dans cette mémoire de gestion d'une part le nom de l'abonné, d'autre part le mode de facturation choisi : professionnel ou privé ainsi que d'autres indications notamment de durée et de distance permettant de calculer le montant à facturer. A la fin de chaque mois un récapitulatif est établi et la facture est calculée en conséquence.

Dans les pays où il y a une facturation des appels entrants, en général, la facturation est liée à la partie nationale d'une communication internationale. Par exemple, un porteur d'un téléphone mobile qui quitte son pays et qui reçoit, dans un autre pays, une communication en provenance soit de son pays soit d'un troisième, sera taxé pour la partie de réception, la partie service dans le pays dans lequel il se trouve. Cette pratique peut ne pas être gênante dans le cas de l'invention parce que, dans la plupart des cas, les voyageurs sont des voyageurs à titre professionnel. Par conséquent ils auront intérêt a choisir le mode d'abonnement professionnel PO, et ils pourront recevoir naturellement tous les appels qui leur sont adressés et qui seront dans ces conditions comptabilisés sur leur frais professionnels.

## Revendications

1. Procédé d'établissement d'une connexion téléphonique entre un premier et un deuxième (8) interlocuteur, ce premier interlocuteur disposant d'un poste téléphonique (7) du type mobile et étant en relation avec le deuxième interlocuteur par l'intermédiaire d'un système téléphonique qui comporte un central (1) et un réseau (3-6) de liaisons (2) avec des postes téléphoniques mobiles, ce procédé comportant les étapes suivantes:
- on mémorise dans une mémoire (11) de correspondance du central un enregistrement montrant une correspondance entre une identité relative à ce premier interlocuteur et un numéro de téléphone par lequel ce premier interlocuteur peut être appelé par le deuxième,
- on mémorise dans une mémoire de travail (12) du central, pendant une session de veille ou d'appel du poste téléphonique mobile de ce premier interlocuteur, une correspondance entre cette identité de ce premier interlocuteur et un protocole de jonction par lequel il peut être joint,
caractérisé en ce qu'il comporte les étapes suivantes:
- on mémorise, dans la mémoire de correspondance du central, un deuxième enregistrement de correspondance entre l'identité de ce premier interlocuteur et son numéro de téléphone,
- (et) on assortit chacun des deux enregistrements de correspondance ainsi mémorisés d'une information relative à un mode (PO,PI) de gestion de la connexion à établir, et
- on assortit un des deux enregistrements de correspondance d'une information d'activation.

2. Procédé selon la revendication 1, caractérisé en ce que
- le protocole de jonction comporte un traitement d'une information de localisation (5) du lieu où se trouve le poste mobile, et un traitement d'une information de mode de connexion pour entrer en relation avec ce poste téléphonique mobile.

3. Procédé selon l'une des revendications 1 ou 2, caractérisé en ce que
- on mémorise un troisième enregistrement de correspondance entre une identité de ce premier interlocuteur et son numéro de téléphone, et
- on assortit ce troisième enregistrement d'une indication relative à un mode de connexion (EN) de la connexion à établir.

4. Procédé selon l'une des revendications 1 à 3, caractérisé en ce que
- on mémorise d'une manière temporaire, dans la mémoire de travail ou dans la mémoire de correspondance, une indication (13, 14) montrant quel type de session de veille a été ouverte par le poste téléphonique mobile.

5. Procédé selon l'une des revendications 1 à 4, caractérisé en ce que
- on relie le poste téléphonique mobile à un support (19) à puce,
- on ouvre une session de veille du poste téléphonique mobile en choisissant un mode (PIN) particulier de reconnaissance du support à puce.

6. Procédé selon la revendication 5, caractérisé en ce que
- on organise (20-22) la mémoire du support à puce pour que certaines zones de cette mémoire puissent être utilisées quel que soit le mode particulier de reconnaissance choisi.

7. Procédé selon l'une des revendications 1 à 6, caractérisé en ce que
- on mémorise dans une mémoire (23) de gestion du central un enregistrement relatif à une identité de ce premier interlocuteur, à un mode de gestion d'une connexion établie, et à une durée de cette connexion.

8. Dispositif d'établissement d'une connexion téléphonique entre un premier et un deuxième (8) interlocuteur comportant, pour ce premier interlocuteur, un poste téléphonique (7) mobile en relation avec le deuxième interlocuteur par l'intermédiaire d'un système téléphonique qui comporte un central (1) et un réseau (3-6) de liaisons (2) avec des stations mobiles, une mémoire (11) de correspondance dans ce central pour mémoriser un enregistrement montrant une correspondance entre une identité relative à ce premier interlocuteur et un numéro de téléphone par lequel ce premier interlocuteur peut être appelé par le deuxième, une mémoire (12) de travail dans ce central pour mémoriser, pendant une session de veille ou d'appel du poste téléphonique mobile de ce premier interlocuteur, une correspondance entre cette identité de ce premier interlocuteur et un protocole de jonction par lequel il peut être jcint, caractérisé en ce qu'il comporte:
- dans la mémoire (11) de correspondance du central, au moins deux enregistrements de correspondance entre une identité de ce premier interlocuteur et ce numéro de téléphone, et dans une de ces mémoires une première zone supplémentaire (14, 24) en correspondance avec chacun de ces enregistrements pour mémoriser une indication relative à un mode de gestion de la connexion à établir et une deuxième zone supplémentaire (13) pour mémoriser un état d'activation d'un de ces enregistrements.

9. Dispositif selon la revendication 8, caractérisé en ce que le poste téléphonique mobile comporte une interface avec un support à puce électronique et un support (19) à puce.

## Patentansprüche

1. Verfahren zum Herstellen einer Fernsprechverbindung zwischen einem ersten und einem zweiten (8) Teilnehmer, wobei der erste Teilnehmer über ein Mobiltelefon (7) verfügt und mit dem zweiten Gesprächsteilnehmer über ein Telefonnetz in Beziehung steht, das eine Zentrale (1) und ein Netz (3-6) von Verbindungen (2) mit Mobiltelefonen umfaßt, wobei das Verfahren folgende Schritte umfaßt:
- Abspeichern einer Aufzeichnung, die eine Korrespondenz zwischen einer den ersten Gesprächsteilnehmer betreffenden Identität und einer Telefonnummer, unter der der erste Gesprächsteilnehmer vom zweiten angerufen werden kann, angibt, in einem Korrespondenzspeicher (11) der Zentrale,
- während eines Bereitschafts- oder Gesprächszeitraums des Mobiltelefons des ersten Gesprächsteilnehmers, Abspeichern einer Korrespondenz zwischen dieser Identität des ersten Gesprächsteilnehmers und einem Verbindungsprotokoll, unter dem er erreicht werden kann, in einem Arbeitsspeicher (12) der Zentrale,
**gekennzeichnet durch**
folgende Schritte:
- Abspeichern einer zweiten Korrespondenzaufzeichnung zwischen der Identität des ersten Gesprächsteilnehmers und seiner Telefonnummer im Korrespondenzspeicher der Zentrale,
- Zuordnen einer einen Modus (PO, PI) der Verwaltung der herzustellenden Gesprächsverbindung betreffenden Information zu jeder der zwei Korrespondenzaufzeichnungen, und
- Zuordnen einer Aktivierungsinformation zu einer der zwei Korrespondenzaufzeichnungen.

2. Verfahren nach Anspruch 1, dadurch gekennzeichnet, daß
- das Verbindungsprotokoll eine Verarbeitung einer Lokalisierungsinformation (5) des Ortes, an dem sich das Mobiltelefon befindet, und eine Verarbeitung einer Information über den Gesprächsverbindungsmodus zum Herstellen einer Beziehung mit dem Mobiltelefon umfaßt.

3. Verfahren nach einem der Ansprüche 1 oder 2, dadurch gekennzeichnet, daß
- eine dritte Korrespondenzaufzeichnung zwischen einer Identität des ersten Gesprächsteilnehmers und seiner Telefonnummer abgespeichert wird und
- dieser dritten Aufzeichnung ein Hinweis auf einen Gesprächsverbindungsmodus (EN) der herzustellenden Gesprächsverbindung zugeordnet wird.

4. Verfahren nach einem der Ansprüche 1 bis 3, dadurch gekennzeichnet, daß
- zeitweilig im Arbeitsspeicher oder im Korrespondenzspeicher eine Angabe (13, 14) abgespeichert wird, die angibt, welche Art von Bereitschaftszustand durch das Mobiltelefon eröffnet worden ist.

5. Verfahren nach einem der Ansprüche 1 bis 4, dadurch gekennzeichnet, daß
- das Mobiltelefon mit einem Chipträger (19) verbunden wird,
- ein Bereitschaftszeitraum des Mobiltelefons eröffnet wird, indem ein bestimmter Erkennungsmodus (PIN) des Chipträgers ausgewählt wird.

6. Verfahren nach Anspruch 5, dadurch gekennzeichnet, daß
- der Speicher (20-22) des Kartenträgers so organisiert wird, daß bestimmte Abschnitte dieses Speichers unabhängig vom ausgewählten bestimmten Erkennungsmodus verwendet werden können.

7. Verfahren nach einem der Ansprüche 1 bis 6, dadurch gekennzeichnet, daß
- in einem Verwaltungsspeicher (23) der Zentrale eine Aufzeichnung abgespeichert wird, die eine Identität des ersten Gesprächsteilnehmers, einen Verwaltungsmodus einer hergestellten Gesprächsverbindung und eine Dauer dieser Gesprächsverbindung betrifft.

8. Vorrichtung zum Herstellen einer Fernsprechverbindung zwischen einem ersten und einem zweiten (2) Gesprächsteilnehmer, die für den ersten Gesprächsteilnehmer umfaßt: ein Mobiltelefon (7), das mit dem zweiten Gesprächsteilnehmer über ein Telefonsystem in Beziehung steht, das eine Zentrale (1) und ein Netz (3-6) von Verbindungen (2) mit Mobilstationen, einen Korrespondenzspeicher (11) in der Zentrale zum Speichern einer Aufzeichnung, die eine Korrespondenz zwischen einer den ersten Gesprächsteilnehmer betreffenden Identität und einer Telefonnummer angibt, über die der erste Gesprächsteilnehmer vom zweiten angerufen werden kann, einen Arbeitsspeicher (12) in der Zentrale zum Abspeichern während eines Bereitschafts-oder Gesprächszeitraums des Mobiltelefons des ersten Gesprächsteilnehmers, einer Korrespondenz zwischen dieser Identität des ersten Gesprächsteilnehmers und einem Verbindungsprotokoll, über das er erreicht werden kann, dadurch gekennzeichnet, daß sie aufweist:
- im Korrespondenzspeicher (11) der Zentrale, wenigstens zwei Aufzeichnungen einer Korrespondenz zwischen einer Identität des ersten Gesprächsteilnehmers und dieser Telefonnummer, und in einem dieser Speicher einen ersten Zusatzabschnitt (14, 24), entsprechend einer jeden dieser Aufzeichnungen, zum Speichern einer Angabe betreffend einen Verwaltungsmodus der herzustellenden Gesprächsverbindung und einen zweiten Zusatzabschnitt (13) zum Abspeichern eines Aktivierungszustands einer dieser Aufzeichnungen.

9. Vorrichtung nach Anspruch 8, dadurch gekennzeichnet, daß das Mobiltelefon eine Schnittstelle für einen Chipkartenträger und einen Chipkartenträger (19) umfaßt.

## Claims

1. Method of establishing a telephonic connection between a first and a second speaker, this first speaker having a telephone (7) of the mobile type and being connected to the second speaker by means of a telephonic system comprising a central system (1) and a network (3-6) of links (2) with mobile telephones, this method consisting of the following steps:
- an entry is recorded in a correlation memory (11) of the central system indicating a correlation between an identity pertaining to this first speaker and a telephone number by means of which this first speaker may be called by the second,
- when the mobile telephone of this first speaker is in stand-by mode or in a calling session, a correlation between this identity of this first speaker and a connection protocol by which he may be connected is stored in a working storage memory (12) of the central system,
characterised in that it consists of the following steps:
- a second entry is stored in the correlation memory of the central system establishing a correlation between the identity of this first speaker and his telephone number,
- (and) a datum pertaining to a management mode (PO, PI) for the connection to be established is assigned to each of the two correlation entries stored in this manner, and
- one of the two correlation entries is assigned an activation datum.

2. Method as claimed in claim 1, characterised in that
- the connection protocol consists in processing a datum for locating (5) the place in which the mobile telephone is located and processing a connection mode datum for initiating a connection with this mobile telephone.

3. Method as claimed in one of claims 1 or 2, characterised in that
- a third entry is recorded correlating an identity of this first speaker and his telephone number, and
- this third entry is assigned an indication pertaining to a connection mode (EN) of the connection to be established.

4. Method as claimed in one of claims 1 to 3, characterised in that
- an indication (13, 14) is temporarily stored in the working storage memory or in the correlation memory showing what type of stand-by session has been initiated by the mobile telephone.

5. Method as claimed in one of claims 1 to 4, characterised in that
- the mobile telephone is connected to a chip support (19),
- the mobile telephone is switched on to a stand-by session by selecting a specific recognition mode (PIN) of the chip support.

6. Method as claimed in claim 5, characterised in that
- the chip support memory is organised (20-22) so that certain zones of this memory may be used irrespective of the specific recognition mode selected.

7. Method as claimed in one of claims 1 to 6, characterised in that
- an entry pertaining to an identity of this first speaker, a management mode of an established connection and a duration of this connection is stored in a central management memory (23).

8. Device for establishing a telephonic connection between a first and a second (8) speaker, consisting, in the case of this first speaker, of a mobile telephone (7) connected to the second speaker by means of a telephonic system which consists of a central system (1) and a network (3-6) of links (2) with mobile stations, a correlation memory (11) in this central system to store an entry indicating a correlation between an identity pertaining to this first speaker and a telephone number by which this first speaker may be called by the second, a working storage memory (12) in this central system to store, during a stand-by session or call from the mobile telephone of this first speaker, a correlation between this identity of this first speaker and a connection protocol by which he may be connected, characterised in that it has:
- in the correlation memory (11) of the central system at least two correlation entries between an identity of this first speaker and this telephone number and, in one of these memories a first supplementary zone (14, 24) correlated with each of these entries in order to store an indication pertaining to a management mode of the connection to be established and a second supplementary zone (13) to store an activation status of one of these entries.

9. Device as claimed in claim 8, characterised in that the mobile telephone has an interface with an electronic chip support and a chip support (19).
